# EUROPÄISCHE PATENTSCHRIFT

(11) **EP 1 195 312 B1**
(45) Veröffentlichungstag und Bekanntmachung des Hinweises auf die Patenterteilung: **08.10.2003**
(21) Anmeldenummer: 01118725.9
(22) Anmeldetag: 06.08.2001
(51) Int. Cl.: B62D 1/06, B62D 1/08

(54) **Lenkrad mit Dekorelement**
Steering wheel comprising a decorative covering element
Volant pourvu d'un élément d'habillage décoratif

(30) Priorität: 09.08.2000 DE 20013706 U
(43) Veröffentlichungstag der Anmeldung: 10.04.2002
(73) Patentinhaber: TRW Automotive Safety Systems GmbH, 63743 Aschaffenburg (DE)
(72) Erfinder: Kreuzer, Martin, 63839 Kleinwallstadt (DE); Lehmann, Michael, 63739 Aschaffenburg (DE)
(74) Vertreter: Kitzhofer, Thomas, Dipl.-Ing.

(56) Entgegenhaltungen:
- WO-A-00/05123
- DE-U- 29 803 133
- DE-U- 29 910 997
- US-A- 2 623 405

## Beschreibung

Die Erfindung betrifft ein Lenkrad mit einem Lenkradkranz, einer Nabe und wenigstens einer Lenkradkranz und Nabe verbindenden Speiche, wobei Lenkradkranz und/oder Speiche ein Skelett, eine das Skelett umgebende Umschäumung oder Umspritzung sowie eine um die Umschäumung oder Umspritzung angeordnete Schale und wenigstens ein Dekorelement aufweisen bzw. aufweist.

Um Lenkrädern ein hochwertiges Aussehen zu verleihen, ist es bekannt, am Lenkradkranz Dekorelemente mit speziellen Oberflächen, z.B. Holz, Aluminium oder Kohlefaser, anzubringen. Oft werden solche Dekorelemente mit einer Belederung des Lenkradkranzes kombiniert.

Ein Lenkrad mit derartigen Dekorelementen, ist z.B. in der DE 298 03 133 U1 beschrieben. Das dort verwendete Dekorelement erstreckt sich im Querschnitt über einen Winkel von etwa 90° in Umfangsrichtung des Lenkradkranzes. Es ist über eine Rastverbindung mit einem in der Umschäumung des Lenkradskelettes verankerten Bauteil verbunden. Diese Konstruktion erfordert ein aufwendiges Spritzgußwerkzeug zur Herstellung der Umschäumung.

Es ist ferner bekannt, ein Lenkradskelett mit einer Umschäumung zu umgeben und diese Umschäumung wiederum mit einer extern gefertigten Schale zu versehen.

Der vorliegenden Erfindung stellt sich die Aufgabe, ein Lenkrad auf einfache, kostengünstige und flexible Weise mit Dekorelementen zu versehen.

Diese Aufgabe wird bei einem Lenkrad der oben genannten Art dadurch gelöst, daß das Dekorelement über wenigstens ein Rastelement unmittelbar mit der Schale verbunden ist. Da das Dekorelement an der Schale befestigt ist und nicht in der Umschäumung oder Umspritzung, kann das Spritzwerkzeug für die Umschäumung oder Umspritzung deutlich einfacher gestaltet sein als nach dem genannten Stand der Technik. Die Verrastung mit der Schale bietet auch den Vorteil, daß das Dekorelement weniger aufwendig und mit einer relativ geringen Eigenstabilität hergestellt werden kann, da Griff und Festigkeit des Lenkradkranzes oder der Speiche durch die Schale bestimmt werden. Die Verwendung einer Schale, die die Umschäumung oder Umspritzung des Skeletts umgibt, ermöglicht einen modularen Aufbau des Lenkrads und erleichtert auf diese Weise Änderungen des Designs, da nur das Werkzeug für die Schale, die unabhängig vom Rest des Lenkrads hergestellt werden kann, geändert werden muß, um eine Variation in der Anzahl, Größe oder Anordnung der Dekorelemente erzielen zu können. Das Verrasten bietet eine schnelle und sichere Methode zur Befestigung des Dekorelementes. Da das Dekorelement nicht die Funktion der Schale an der Stelle seines Sitzes übernehmen muß, ist eine relativ geringe Eigenmasse ausreichend. Eine Verrastung ist daher für die auftretenden Belastungen, auch für Schwingungen, ausreichend.

In der Schale ist vorzugsweise wenigstens ein Durchbruch oder, allgemeiner, eine Aussparung vorgesehen, in den das Rastelement hineinragt, wodurch das Dekorelement mit der Schale verrastet ist. Die Fertigung eines Durchbruchs oder einer Aussparung in der Schale stellt spritzgußtechnisch kein Problem dar. Durchbrüche mit kleinem Querschnitt sind ausreichend, um ein Dekorelement zu befestigen.

In einer vorteilhaften Ausführungsform der Erfindung ragt das Rastelement durch den Durchbruch hindurch und hintergreift die Schale. Dies ist eine einfache, kostengünstige und stabile Methode zur Befestigung des Dekorelements. Ein weiterer Vorteil liegt darin, daß das Rastelement des Dekorelementes sehr einfach gestaltet sein kann.

Vorzugsweise weist die Umschäumung oder Umspritzung eine Aussparung auf, in die sich das Rastelement erstreckt. Um das Hintergreifen der Schale zu erleichtern, ist es günstig, an der entsprechenden Stelle eine Aussparung in der Umschäumung oder Umspritzung vorzusehen. Dies läßt sich fertigungstechnisch durch eine einfache Modifikation des Werkzeugs erreichen.

Vorteilhafterweise umgibt die Schale in Umfangsrichtung das Skelett vollständig. So kann sowohl der gewünschte Durchmesser des Lenkradkranzes oder der Speiche als auch das allgemeine Griffgefühl durch Durchmesser und Material der Schale vorgegeben werden.

Das Dekorelement kann, im Querschnitt des Lenkradkranzes gesehen, an die Schale radial außen angrenzen, das heißt, das Dekorelement bildet eine Art zweite, äußere Schale, was die Lagestabilität des Dekorelements erhöht.

Bevorzugt besteht die Schale aus einer Oberschale und einer Unterschale, die an ihren Rändern miteinander verbunden sind. Dies erlaubt eine Erhöhung der Flexibilität des modularen Aufbaus des Lenkrades, da z.B. die Unterschale für alle Lenkradmodelle gleich bleiben kann, während die Oberschale an das jeweilige Design angepaßt wird. Dies gilt vor allem, wenn Oberschale und Unterschale durch eine Rastverbindung miteinander verbunden sind. Auf diese Weise ergibt sich ein modularer Aufbau des Lenkrades, bei dem auf einen Grundkörper, der aus dem Skelett und der Umschäumung oder Umspritzung besteht, unterschiedliche Schalenteile und Dekorelemente nur aufgesteckt werden müssen. So läßt sich die Anordnung, Zahl und Größe der Dekorelemente sehr flexibel gestalten.

Es ist günstig, wenn sich das Dekorelement unmittelbar auf der Schale abstützt, da in diesem Fall das Dekorelement selbst keine allzu hohe Eigenstabilität aufweisen muß, weil es von der Schale getragen wird. Dies verbilligt die Herstellung der Dekorelemente.

In einer Ausführungsform der Erfindung ist eine Belederung vorgesehen, die die Schale umgibt, und es ist vorgesehen, daß die Ränder der Belederung wenigstens teilweise zwischen dem Dekorelement und der Schale geklemmt sind. Im Bereich des Dekorelementes entfällt demnach die Notwendigkeit, die Belederung zu vernähen oder zu verkleben, da sie über das Dekorelement durch Festklemmen befestigt werden kann.

Vorzugsweise ist das Rastelement einstückig am Dekorelement angeformt, was eine kostengünstige Fertigung erlaubt. Das Dekorelement kann aber auch aus einem Träger, an dem das Rastelement einstückig angeformt ist, sowie einer Dekoroberfläche, z.B. aus Holzfurnier, Holzimitat, Aluminium oder einem anderen Material bestehen. Für Metalloberflächen kann das Dekorelement auch komplett aus Metall gefertigt sein.

Selbstverständlich können auch mehrere Dekorelemente an einem Lenkrad vorgesehen sein, wobei die Dekorelemente sowohl am Lenkradkranz als auch an den Lenkradspeichen angeordnet sein können.

Es ist auch denkbar, das Rastelement des Dekorelementes z.B. als Aussparung im Dekorelement zu gestalten und etwa einen Vorsprung oder einen Rasthaken an der Schale auszubilden.

Weitere Merkmale und Vorteile der Erfindung ergeben sich aus der nachfolgenden Beschreibung eines Ausführungsbeispiels, mit Bezug auf die beigefügten Zeichnungen. In diesen zeigen:
- Figur 1 ein erfindungsgemäßes Lenkrad; und
- Figur 2 einen Schnitt entlang der Linie I-I oder der Linie II-II in Figur 1.

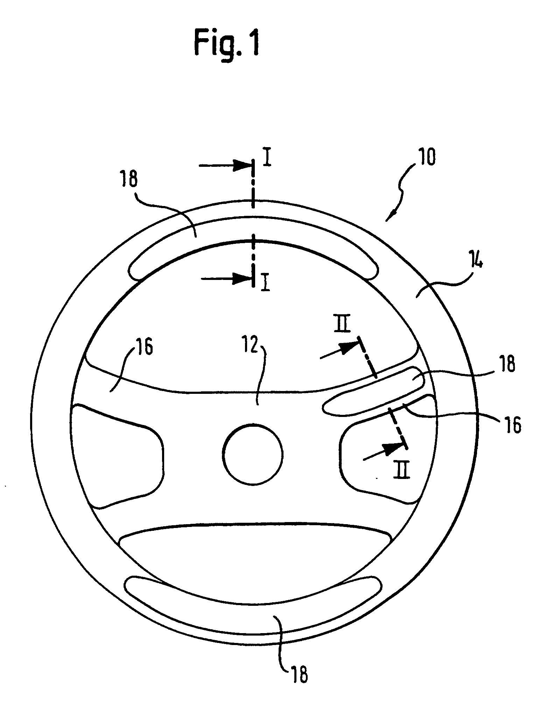

Figur 1 zeigt ein erfindungsgemäßes Lenkrad 10, mit einer Nabe 12, einem Lenkradkranz 14 sowie Speichen 16, die den Lenkradkranz 14 mit der Nabe 12 verbinden. Auf dem Lenkradkranz 14 und/oder auf der Speiche 16 sind Dekorelemente 18 angeordnet. Zahl und Anordnung der Dekorelemente 18 sind rein beispielhaft gewählt, die Dekorelemente können an beliebigen Stellen von Lenkradkranz und Speiche in beliebiger Anzahl plaziert werden.

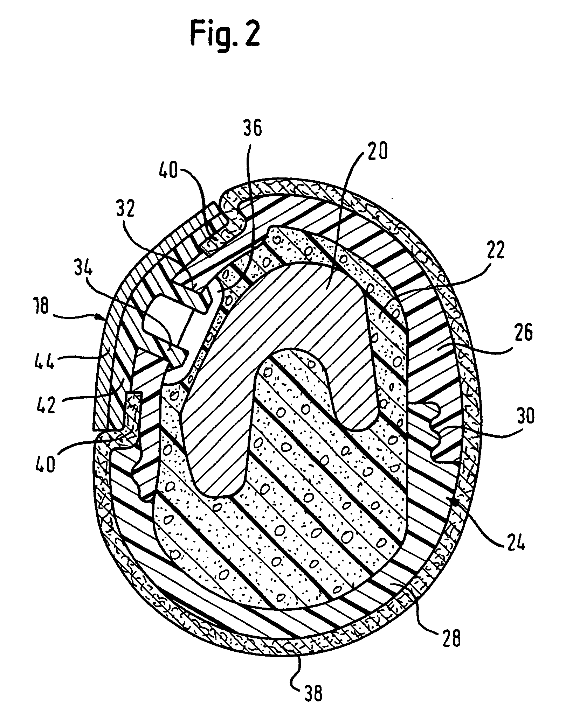

Figur 2 zeigt einen Schnitt durch den Lenkradkranz entlang der Linie I-I oder durch eine Speiche entlang der Linie II-II in Figur 1 und verdeutlicht den Aufbau des Lenkrads. Der Lenkradkranz 14 und die Speiche 16 enthalten in ihrem Inneren ein Skelett 20, das dem Lenkrad die grundlegende Stabilität verleiht. Dieses Skelett 20 ist von einer Umschäumung 22 umgeben, die z.B. aus PUR bestehen und auf das Skelett in einem bekannten Schäumverfahren aufgebracht werden kann.

Die mit 22 bezeichnete Schicht kann aber auch aus einem Thermoplasten im Spritzgußverfahren bestehen oder aus einem expandierbaren PE oder PP.

Die Umschäumung ist von einer Schale 24 umgeben, die im gezeigten Beispiel aus einer Oberschale 26 und einer Unterschale 28 besteht. Ober- und Unterschale sind hier an ihren Rändern miteinander über eine Rastverbindung 30 verbunden, sie können aber genauso gut verklebt oder durch eine andere bekannte Technik miteinander verbunden sein. Die Oberschale 26 weist einen Durchbruch 32 auf. Zur Befestigung weiterer Dekorelemente können weitere, nicht gezeigte Durchbrüche vorgesehen sein. Es ist auch möglich, mehrere Durchbrüche zur Befestigung eines Dekorelementes vorzusehen. Im Schnitt durch den Lenkradkranz oder die Speiche gesehen, ist das Dekorelement 18 also von radial außen auf die Schale aufgesetzt, so daß sich in diesem Bereich eine doppellagige Struktur ergibt.

Das Dekorelement 18 weist ein Rastelement 34 auf, das vorzugsweise einstückig mit dem Dekorelement 18 verbunden ist. Das Rastelement 34, bestehend aus zwei flexiblen Haken, ragt durch den Durchbruch 32 hindurch und hintergreift die Oberschale 26. In der Umschäumung 22 ist an dieser Stelle eine Ausnehmung 36 vorgesehen. Das Rastelement 34 kann auf beliebige bekannte Art gestaltet sein.

Der Lenkradkranz 14 oder die Speiche 16 sind in diesem Ausführungsbeispiel mit einer Belederung 38 umgeben, die unter dem Dekorelement 18 unterbrochen ist. Die Ränder 40 der Belederung sind zwischen der Oberschale 26 und dem Dekorelement 18 geklemmt, so daß im Bereich des Dekorelementes 18 eine weitere Befestigung der Belederung 38 unterbleiben kann.

Der Zusammenbau des erfindungsgemäßen Lenkrades erfolgt folgendermaßen. Zunächst wird wie beschrieben das Lenkrad-Skelett 20 mit der Umschäumung 22 versehen, anschließend werden die Unterschale 28 und die Oberschale 26 um die Umschäumung herum angeordnet und miteinander über die Rastverbindung 30 verbunden. Im folgenden Schritt wird die Belederung 38 aufgezogen und an Stellen außerhalb des Dekorelementes 18 auf bekannte Weise geschlossen. Anschließend wird das Dekorelement 18 mit seinem Rastelement 34 in den Durchbruch 32 eingeschoben und verrastet mit der Oberschale 26 durch das Hintergreifen des Rastelementes 34 an der Rückseite der Oberschale 26, wobei die Ränder 40 der Belederung 38 zwischen dem Dekorelement 18 und der Oberschale 26 festgeklemmt werden.

Das Dekorelement 18 selbst kann aus zwei Abschnitten aufgebaut sein, einem Kunststoffträger 42, an dem einstückig das Rastelement 34 angeformt ist, sowie einem Oberflächenbauteil 44 mit einem optisch hochwertigen Oberflächenmaterial.

## Patentansprüche

1. Lenkrad, mit einem Lenkradkranz (14), einer Nabe (12) und wenigstens einer Lenkradkranz (14) und Nabe (12) verbindenden Speiche (16), wobei Lenkradkranz (14) und/oder Speiche (16) ein Skelett (20), eine das Skelett (20) umgebende Umschäumung (22) oder Umspritzung sowie eine um die Umschäumung (22) oder Umspritzung angeordnete Schale (24) und wenigstens ein Dekorelement (18) aufweisen bzw. aufweist, **dadurch gekennzeichnet, daß** das Dekorelement (18) über wenigstens ein Rastelement (34) unmittelbar an der Schale (24) befestigt ist.

2. Lenkrad nach Anspruch 1, **dadurch gekennzeichnet, daß** in der Schale (24) wenigstens ein Durchbruch (32) vorgesehen ist.

3. Lenkrad nach Anspruch 2, **dadurch gekennzeichnet, daß** das Rastelement (34) des Dekorelements (18) in den Durchbruch (32) hineinragt, um das Dekorelement (18) mit der Schale (24) zu verrasten.

4. Lenkrad nach Anspruch 3, **dadurch gekennzeichnet, daß** das Rastelement (34) des Dekorelements (18) durch den Durchbruch (32) hindurchragt und die Schale (24) hintergreift.

5. Lenkrad nach einem der vorhergehenden Ansprüche, **dadurch gekennzeichnet, daß** die Umschäumung (22) oder Umspritzung eine Ausnehmung (36) aufweist, in die sich das Rastelement (34) erstreckt.

6. Lenkrad nach einem der vorhergehenden Ansprüche, **dadurch gekennzeichnet, daß**, im Querschnitt des Lenkradkranzes bzw. der Speiche gesehen, die Schale (24) in Umfangsrichtung das Skelett (20) vollständig umgibt.

7. Lenkrad nach Anspruch 6, **dadurch gekennzeichnet, daß** das Dekorelement (18), im Querschnitt des Lenkradkranzes bzw. der Speiche gesehen, an die Schale (24) radial außen angrenzt.

8. Lenkrad nach Anspruch 7, **dadurch gekennzeichnet, daß** die Schale (24) aus einer Oberschale (26) und einer Unterschale (28) besteht, die an ihren Rändern miteinander verbunden sind.

9. Lenkrad nach Anspruch 8, **dadurch gekennzeichnet, daß** die Oberschale (26) und die Unterschale (28) durch eine Rastverbindung (30) miteinander verbunden sind.

10. Lenkrad nach einem der vorhergehenden Ansprüche, **dadurch gekennzeichnet, daß** sich das Dekorelement (18) außenseitig unmittelbar auf der Schale (24) abstützt.

11. Lenkrad nach einem der vorhergehenden Ansprüche, **dadurch gekennzeichnet, daß** eine Belederung (38) vorgesehen ist, die die Schale (24) umgibt, und daß Ränder (40) der Belederung (38) wenigstens teilweise zwischen dem Dekorelement (18) und der Schale (24) geklemmt sind.

12. Lenkrad nach einem der vorhergehenden Ansprüche, **dadurch gekennzeichnet, daß** das Rastelement (34) einstückig am Dekorelement (18) angeformt ist.

13. Lenkrad nach einem der vorhergehenden Ansprüche, **dadurch gekennzeichnet, daß** das Dekorelement (18) aus einem innenseitigen Kunststoffträger (42) und einem Oberflächenbauteil (44) besteht.

14. Lenkrad nach Anspruch 13, **dadurch gekennzeichnet, daß** am Kunststoffträger (42) das Rastelement (34) einstückig angeformt ist.

## Claims

1. A steering wheel, comprising a steering wheel rim (14), a hub (12) and at least one spoke (16) connecting the steering wheel rim (14) and the hub (12), the steering wheel rim (14) and/or the spoke (16) having a skeleton (20), a foam casing (22) or injection-molded casing surrounding the skeleton (20) as well as a shell (24) arranged around the foam casing (22) or injection-molded casing and at least one decorative element (18), **characterized in that** the decorative element (18) is directly attached to the shell (24) via at least one latching element (34).

2. The steering wheel as claimed in claim 1, **characterized in that** in the shell (24) at least one opening (32) is provided.

3. The steering wheel as claimed in claim 2, **characterized in that** the latching element (34) of the decorative element (18) protrudes into the opening (32) in order to latch the decorative element (18) with the shell (24).

4. The steering wheel as claimed in claim 3, **characterized in that** the latching element (34) of the decorative element (18) protrudes through the opening (32) and engages behind the shell (24).

5. The steering wheel as claimed in any of the preceding claims, **characterized in that** the foam casing (22) or injection-molded casing has a recess (36) into which the latching element (34) extends.

6. The steering wheel as claimed in any of the preceding claims, **characterized in that**, as viewed in a cross-section of the steering wheel rim or of the spoke, the shell (24) completely surrounds the skeleton (20) in the peripheral direction.

7. The steering wheel as claimed in claim 6, **characterized in that**, as viewed in a cross-section of the steering wheel rim or of the spoke, the decorative element (18) radially adjoins the shell (24) on the outside.

8. The steering wheel as claimed in claim 7, **characterized in that** the shell (24) consists of an upper shell (26) and a lower shell (28), which are connected with each other at their edges.

9. The steering wheel as claimed in claim 8, **characterized in that** the upper shell (26) and the lower shell (28) are connected with each other by a latching connection (30).

10. The steering wheel as claimed in any of the preceding claims, **characterized in that** the decorative element (18) is directly supported on the shell (24) on the outer side.

11. The steering wheel as claimed in any of the preceding claims, **characterized in that** there is provided a leather covering (38) which surrounds the shell (24), and that edges (40) of the leather covering (38) are at least partly clamped between the decorative element (18) and the shell (24).

12. The steering wheel as claimed in any of the preceding claims, **characterized in that** the latching element (34) is integrally molded on the decorative element (18).

13. The steering wheel as claimed in any of the preceding claims, **characterized in that** the decorative element (18) consists of a plastic carrier (42) on the inner side and of a surface component (44).

14. The steering wheel as claimed in claim 13, **characterized in that** the latching element (34) is integrally molded on the plastic carrier (42).

## Revendications

1. Volant comportant une couronne de volant (14), un moyeu (12) et au moins un rayon (16) reliant la couronne de volant (14) au moyeu (12), la couronne de volant (14) et/ou le rayon (16) présentant un squelette (20), un entourage de mousse (22) ou un enrobage entourant le squelette (20) ainsi qu'une coque agencée autour de l'entourage de mousse (22) ou de l'enrobage, et au moins un élément décoratif (18), **caractérisé en ce que** l'élément décoratif (18) est fixé par au moins un élément d'enclenchement (34) directement à la coque (24).

2. Volant selon la revendication 1, **caractérisé en ce qu'**il est prévu au moins une percée (32) dans la coque (24).

3. Volant selon la revendication 2, **caractérisé en ce que** l'élément d'enclenchement (34) de l'élément décoratif (18) fait saillie dans la percée (32) pour enclencher l'élément décoratif (18) avec la coque (24).

4. Volant selon la revendication 3, **caractérisé en ce que** l'élément d'enclenchement (34) de l'élément décoratif (18) fait saillie à travers la percée (32) et engage la coque (24) par l'arrière.

5. Volant selon l'une des revendications précédentes, **caractérisé en ce que** l'entourage en mousse (22) ou l'enrobage présente un évidement (36) dans lequel s'étend l'élément d'enclenchement (34).

6. Volant selon l'une des revendications précédentes, **caractérisé en ce que** vu respectivement en section transversale de la couronne de volant ou du rayon, la coque (24) entoure entièrement le squelette (20) en direction périphérique.

7. Volant selon la revendication 7, **caractérisé en ce que** l'élément décoratif (18), vu respectivement en section transversale de la couronne de volant ou du rayon, est adjacent à la coque (24), radialement à l'extérieur.

8. Volant selon la revendication 7, **caractérisé en ce que** la coque (24) est constituée par une coque supérieure (26) et une coque inférieure (28) qui sont reliées l'une à l'autre sur leurs bords.

9. Volant selon la revendication 8, **caractérisé en ce que** la coque supérieure (26) et la coque inférieure (28) sont reliées l'une à l'autre par une liaison d'enclenchement (30).

10. Volant selon l'une des revendications précédentes, **caractérisé en ce que** l'élément décoratif (18) prend appui à l'extérieur directement sur la coque (24).

11. Volant selon l'une des revendications précédentes, **caractérisé en ce qu'**il est prévu un entourage de cuir (38) qui entoure la coque (24) et **en ce que** les bords (40) de l'entourage de cuir (38) sont serrés au moins partiellement entre l'élément décoratif (18) et la coque (24).

12. Volant selon l'une des revendications précédentes, **caractérisé en ce que** l'élément d'enclenchement (34) est formé d'un seul tenant sur l'élément décoratif (18).

13. Volant selon l'une des revendications précédentes, **caractérisé en ce que** l'élément décoratif (18) est constitué par un support de matière plastique (42) sur la face intérieure et par un composant de surface (44).

14. Volant selon la revendication 13, **caractérisé en ce que** l'élément d'enclenchement (34) est formé d'un seul tenant sur le support de matière plastique (42).
